# EUROPÄISCHE PATENTSCHRIFT

(11) **EP 1 454 389 B1**
(45) Veröffentlichungstag und Bekanntmachung des Hinweises auf die Patenterteilung: **01.03.2006**
(21) Anmeldenummer: 02798332.9
(22) Anmeldetag: 13.12.2002
(51) Int. Cl.: H01S 3/0975

(54) **HOCHFREQUENZANREGUNGSANORDNUNG**
HIGH FREQUENCY EXCITATION SYSTEM
SYSTEME D'EXCITATION A HAUTE FREQUENCE

(30) Priorität: 15.12.2001 DE 10161743
(43) Veröffentlichungstag der Anmeldung: 08.09.2004
(73) Patentinhaber: Hüttinger Elektronik GmbH & Co. Kg, 79110 Freiburg (DE)
(72) Erfinder: KIRCHMEIER, Thomas, 79331 Teningen (DE); OESTREICHER, Wolfgang, 68163 Mannheim (DE)
(74) Vertreter: Kohler Schmid Möbus
(86) Internationale Anmeldenummer: PCT/EP2002/014217
(87) Internationale Veröffentlichungsnummer: WO 2003/052882

(56) Entgegenhaltungen:
- EP-A- 1 043 108
- DE-A- 4 221 907
- DE-A- 4 322 608
- DE-A- 10 008 485
- DE-A- 19 616 187
- DE-A- 19 719 064
- US-A- 4 295 103
- US-A- 5 469 098
- US-A- 5 751 560

## Beschreibung

### Stand der Technik

Die Erfindung betrifft eine Hochfrequenzanregungsanordnung mit mindestens einem an eine Spannungsquelle anzuschließenden, eine Schaltbrücke enthaltenden Leistungsmodul, das mit einem Verbraucher zu verbinden ist.

Eine solche Hochfrequenzanregungsanordnung ist beispielsweise aus der DE 43 22 608 C2 bekannt geworden.

Hochfrequenzanregungsanordnungen werden beispielsweise zur Anregung eines Plasmas bei Gaslasern, insbesondere CO₂ Lasern, benötigt. Andere Anwendungen liegen im Abscheiden von dünnen Schichten und beim Plasmaätzen. Zur Plasmaanregung ist es grundsätzlich möglich, die Leistung direkt mit Gleichspannung oder niederfrequenter Wechselspannung einzukoppeln. Alternativ kann die Einkopplung kapazitiv durch ein Dielektrikum mit hochfrequenter Spannung erfolgen.

Aus der DE 43 22 608 C2 ist eine Einrichtung zur Leistungsmodulation bei einer Plasmaanregung bekannt. Die Einrichtung umfasst Elektroden zur kapazitiven Leistungseinkopplung in das Plasma, die über mindestens einen Schwingkreis und mindestens eine Endstufe an eine Spannungsquelle angeschlossen sind, von denen die Endstufe zwei Schaltelemente aufweist, die gegensinnig ansteuerbar und deren Schaltsignale dem Schwingkreis zuführbar sind. Der Schwingkreis ist ein Serienschwingkreis und die Modulation der Leistungseinkopplung erfolgt ausgehend von der Resonanzfrequenz durch eine Variation der Schaltfrequenz. Durch den Serienresonanzkreis wird eine sinusförmige Spannung erzeugt, die an den Elektroden anliegt. Die Ansteuerung der Schaltelemente erfolgt über eine Treiberschaltung, die eine aufwändige Potentialtrennung einer Hilfsversorgung benötigt. Bei der Verwendung von MOS-FETs als Schaltelemente entstehen hohe Verlustleistungen, weil die Gate-Source-Kapazität der Schaltelemente über den Innenwiderstand der Treiberschaltung umgeladen werden muss.

### Aufgabe der Erfindung

Aufgabe der vorliegenden Erfindung ist es, eine Hochfrequenzanregungsanordnung der eingangs genannten Art derart weiter zu entwickeln, dass die Leistungsübertragung auf den Verbraucher einfach und kostengünstig erfolgt.

### Gegenstand der Erfindung

Erfindungsgemäß wird diese Aufgabe durch die Kombination der Merkmale von Anspruch 12 gelöst. Dabei kann das Leistungsmodul über einen Leistungsübertrager an den Verbraucher angeschlossen sein, wobei der Leistungsübertrager im Betrieb mit dem Verbraucher einen Serienresonanzkreis bildet. Dabei werden die Streureaktanzen des Leistungsübertragers für die Leistungsanpassung ausgenutzt.

Der Leistungsübertrager erfüllt dabei mehrere Funktionen. Zum einen übernimmt er die Spannungstransformation der im Ausführungsbeispiel vom Leistungsmodul gelieferten Trapez- bzw. Rechteckspannung im Frequenzbereich 2 bis 4 MHz auf eine sinusförmige Spannung im Bereich von 3 bis 6 kV. Der Übertrager wirkt dabei als Sinusfilter bzw. Fourier-Filter. Die Lastanpassung erfolgt einzig und allein durch die Wahl des Frequenzbereiches. Ein Anpassnetzwerk, wie dies häufig im Stand der Technik verwendet wird, erübrigt sich. Somit kann eine erhebliche Einsparung an Bauelementen erreicht werden. Der Verbraucher wird aktiv in die Leistungsübertragung mit einbezogen, indem beispielsweise die Elektrodenkapazität des Verbrauchers als Schwingkreiskapazität verwendet wird. Ein Schwingkreiskondensator ist daher nicht notwendig. Die erfindungsgemäße Anordnung kann allgemein bei Plasmaverfahren zum Einsatz kommen, insbesondere bei der Verwendung von Gaslasern. Allerdings ist es auch möglich, die erfindungsgemäße Anordnung zur Induktionserwärmung, bei der Lichterzeugung und bei ICP-Anwendungen (inductively coupled plasma) zu verwenden.

Bei einer bevorzugten Ausführungsform ist für den Leistungsübertrager eine symmetrische Anordnung vorgesehen. Durch eine symmetrische Anordnung des Leistungsübertragers kann gegenüber einer unsymmetrischen Anordnung die doppelte Elektrodenspannung erzeugt werden bei gleicher Maximalspannung gegenüber Masse.

Wenn der Leistungsübertrager als abstimmbare Luftspule ausgebildet ist, kann man einen zusätzlichen Ferritkern vorsehen, um die Induktivität und die Kopplung des Leistungsübertragers abzustimmen. Bei Verwendung einer Luftspule ist vorteilhafterweise eine Potentialtrennung von Primär- und Sekundärwicklung möglich.

Bei einer alternativen Ausführungsform kann der Leistungsübertrager als Spartransformator ausgebildet sein, falls gewünscht als Luftspule und optional mit zusätzlichem Ferritkern.

Besonders vorteilhaft ist es, wenn die Wicklungen des Leistungsübertragers aus Starrdraht gebildet sind. Dann entstehen bei den in Frage kommenden Betriebsfrequenzen geringere Verluste als bei der Verwendung einer HF-Litze.

Vorzugsweise sind am Leistungsübertrager Messeinrichtungen, insbesondere ein Spannungsdetektor, vorgesehen. Durch den Spannungsdetektor kann erkannt werden, ob beispielsweise bei einem Laser die Zündung der Gasentladung erfolgt ist.

Diese Information kann vorteilhaft zur Steuerung einer Einschaltsequenz verwendet werden.

Bei einer erfindungsgemäßen Ausgestaltung sind Abstimmelemente in den Leistungsübertrager integriert. Auf die Verwendung zusätzlicher diskreter Komponenten kann somit verzichtet werden.

Ist der Leistungsübertrager über eine Streifenleitung an das Leistungsmodul angeschlossen, dann kann aufgrund der großen Oberfläche eine besonders gute Kühlung der Leitung zwischen dem Leistungsmodul und dem Verbraucher erfolgen.

Die Schaltbrücke des Leistungsmoduls weist mindestens zwei Leistungstransistoren, noch vorzugsweise Leistungs-MOS-FETs auf, die jeweils von einem Gatetreiber angesteuert sind. Durch eine solche Anordnung kann ein Schaltnetzteil mit variabler Hochfrequenz im Bereich von 2 bis 4 MHz besonders einfach realisiert werden. Die Versorgungsspannung der Schaltbrücke kann direkt aus dem Wechselstromnetz durch Gleichrichtung entnommen werden. Die Verwendung eines Netztransformators ist daher nicht notwendig. Als Schaltbrücke kann sowohl eine Halbbrücke als auch eine Vollbrücke zum Einsatz kommen. Der Gatetreiber dient der potentialgetrennten Ansteuerung der Halbleiterschalter der Schaltbrücke.

Der Gatetreiber weist mindestens zwei Gateansteuerungen mit je einer Treiberendstufe und einem Gateübertrager auf. Im Gatetreiber werden zwei um 180° versetzte Taktsignale auf eine Spannung von beispielsweise 12V hochgesetzt. Nachgeschaltete Komplementär-Emitterfolger steuern die Treiberendstufe an. Die Treiberendstufe ist bei Ausführungsformen der Erfindung als Gegentaktschaltung zweier Leistungstransistoren, insbesondere von MOSFETs, ausgebildet. Alternativ ist bei Ausführungsformen der Erfindung die Treiberendstufe als Vollbrücke aus je zwei weiteren Komplementär-Emitterfolgern ausgeführt. Die Treiberendstufe erzeugt eine symmetrische Rechteckspannung zur Anregung des Gateübertragers. Der Vorteil der Verwendung eines Gateübertragers liegt darin, dass keine potentialgetrennte Hilfsversorgung erforderlich ist, wie dies beispielsweise bei einer konventionellen Treiberschaltung der Fall wäre.

Wenn die Streuinduktivität des Gateübertragers mit der Eingangskapazität eines angesteuerten Leistungstransistors einen Schwingkreis bildet, wie bei der Erfindung vorgesehen, entsteht ein sinusähnlicher Gatespannungsverlauf am angesteuerten Leistungstransistor, da die Schaltung mit einer Frequenz in der Nähe ihrer Eigenresonanz betrieben wird. Ein sinusähnlicher Gatestrom wirkt sich günstig auf die elektromagnetische Verträglichkeit aus und spart, je nach Güte des Schwingkreises, Ansteuerleistung ein.

Bei einer besonders bevorzugten Ausgestaltung ist der Gateübertrager mit einem Niederfrequenzferrit ausgebildet. Ein Niederfrequenzferrit weist einen mit der Frequenz steigenden Verlustfaktor auf, während die Permeabilität mit steigender Frequenz fällt. Durch beide Eigenschaften wird die Resonanzkurve verbreitert und so der nutzbare Frequenzbereich vergrößert. Ferner bewrikt der Kernverlustfaktor zusammen mit dem Wirkanteil der Eingangsimpedanz des Leistungstransistors eine geringe Güte des Gateschwingkreises, wodurch dieser schnell an-und ausschwingt. Dies ist für schnellen Tastbetrieb vorteilhaft.

Besonders vorteilhaft ist es, wenn gemäß Ausführungsformen der Erfindung für jeden Leistungstransistor ein Impulsformer vorgesehen ist. Eine Grundvoraussetzung für den Betrieb einer Schaltbrücke ist, dass die in Serie geschalteten Leistungstransistoren eine Leitphase von weniger als 180° haben, damit nicht beide Leistungstransistoren gleichzeitig leitend sind. Durch die Spannungsabhängigkeit der Eingangskapazität der Leistungstransistoren und durch die unterschiedlichen Ein- und Ausschaltverzögerungen wird die Leitphase jedoch verlängert, so dass das Ansteuertastverhältnis verkleinert werden muss. Dies geschieht durch den Impulsformer, der die negative Ansteuerphase (=Sperrphase) im Verhältnis zur positiven Ansteuerphase verlängert und gleichzeitig die negative Amplitude der Gatespannung verringert.

Vorzugsweise ist der Impulsformer aus einem Kondensator parallel zur Eingangskapazität des Leistungstransistors und einem schaltenden Element gebildet. Dabei wird der Kondensator nur während der negativen Ansteuerphase parallel zur Eingangskapazität des Leistungstransistors zugeschaltet. Schaltendes Element kann ein Hilfstransistor sein, der von der Spannung des geschalteten Kondensators selbst gesteuert wird. Vorteilhafterweise ist hierfür auf der Sekundärseite des Gateübertragers keine zusätzliche Spannungsversorgung notwendig. Somit wird auf einfache Art und Weise die Impulsform und das Tastverhältnis der Gatespannung eingestellt.

Wenn bei voller Versorgungsspannung die Schaltbrücke in Betrieb genommen wird, aber der Verbraucher, z.B. ein Gaslaser mit noch ungezündeter Gasentladung, keine oder zu wenig Leistung aufnimmt, kann je nach Konstruktion die Schaltbrücke durch Überspannung zerstört werden. Hiergegen sind Vorsichtsmaßnahmen zweckmäßig.

So ist bei Ausführungsformen der erfindungsgemäßen Anordnung und bei einem erfindungsgemäßen Verfahren vorgesehen, dass der Zündvorgang bei einer so hohen Frequenz erfolgt, dass nur eine geringe Leistungseinkopplung in die Schaltbrücke erfolgt. Insbesondere kann der Zündvorgang bei der höchstmöglichen Frequenz (im Beispiel ca. 4MHz) erfolgen. Wird die Frequenz dann nach dem Zündvorgang in Richtung der Eigenresonanzfrequenz verändert, erfolgt eine optimale Leistungseinkopplung in den Verbraucher.

Bei einer Ausführungsform der Anordnung und bei einer Verfahrensvariante erfolgt eine Spannungsüberwachung des Verbrauchers. Durch die Spannungsüberwachung mit Hilfe eines Spannungsdetektors, der z.B. in Elektrodennähe des Verbrauchers kapazitiv gekoppelt ist, kann eine Zündüberwachung des Plasmas folgen. Vorteilhaft kann ein Spannungsaufnehmer (kapazitive Elektrode) am Leistungsübertrager angeordnet werden.

Bei einer bevorzugten Ausgestaltung des Verfahrens wird das Plasma des Verbrauchers durch eine Zündsequenz, insbesondere durch Pulsketten mit kurzer Einzelpulsbreite, gezündet. Durch diese Maßnahme wird die zu schaltende Leistung begrenzt und es kann eine Zerstörung der Leistungstransistoren der Schaltbrücke vermieden werden. Dieser Zustand wird solange aufrecht erhalten, bis die Zündung der Gasentladung durch den Spannungsdetektor erkannt ist.

Beide genannten Maßnahmen können erfindungsgemäß auch gemeinsam vorgesehen werden.

Besonders vorteilhaft ist es, wenn eine selbständige Einstellung der Frequenzen für die vorgenannten Zündmaßnahmen sowie der Frequenzgrenzen für die Leistungsregelung erfolgt. Diese selbständige Einstellung geschieht vorzugsweise während der Inbetriebnahme eines Moduls am Laser in einer softwaregesteuerten Kalibriersequenz.

Vorzugsweise wird die Eingangsleistung jedes Leistungsmoduls eigenständig durch die Frequenz und die Verbraucherleistung für alle Leistungsmodule synchron durch das Tastverhältnis der Signale "HF Ein / HF Aus" geregelt. Die Eingangsleistung jedes Leistungsmoduls wird daher unabhängig von der Verbraucherleistung geregelt. Das Tastverhältnis der Signale "HF Ein / HF Aus" kann in einem Tastverhältnis zwischen 0 und 100 % erfolgen. Es sind Tastfrequenzen im Bereich von 10Hz bis 100KHz vorgesehen. Das Tastsignal wird von der zentralen Lasersteuerung vorgegeben.

Weitere Merkmale und Vorteile der Erfindung ergeben sich aus der nachfolgenden Beschreibung von Ausführungsbeispielen der Erfindung, anhand den Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele der erfindungsgemäßen Hochfrequenzanregungsanordnung sind in der schematischen Zeichnung dargestellt und werden in der nachfolgenden Beschreibung erläutert. Es zeigt:
- **Fig. 1**: eine Prinzipdarstellung einer Hochfrequenzanregungsanordnung zum Betreiben eines Gaslasers;
- **Fig. 2**: eine Vollbrücke des Leistungsmoduls der Hochfrequenzanregungsanordnung der Fig. 1;
- **Fig. 3a**: schematisch eine mit einem zu steuernden MOS-FET direkt gekoppelte Gateansteuerung mit einer Stromversorgungseinheit, die auf dem Source-Potential des zu steuernden MOS-FET liegt.
- **Fig. 3b**: schematisch eine mit einem zu steuernden MOS-FET mittels eines Übertragers gekoppelte Gateansteuerung, die auf Massepotential liegt.
- **Fig. 4**: einen Gatetreiber der Hochfrequenzanregungsanordnung der Fig. 1;
- **Fig. 5**: eine Darstellung des zeitlichen Verlaufs der an den Leistungstransistoren der Vollbrücke der Hochfrequenzanregungsanordnung anliegenden Gatespannung U_{G}
- **Fig. 6**: einen Längsschnitt durch einen Leistungsübertrager mit getrennten Wicklungen.

### Beschreibung der Ausführungsbeispiele

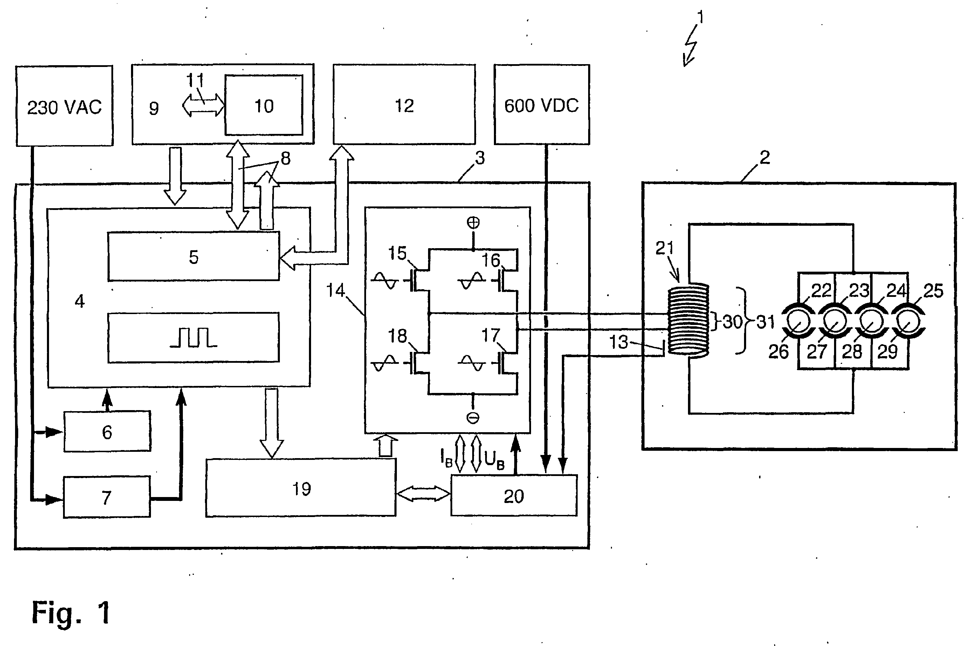

**Fig. 1** zeigt eine Hochfrequenzanregungsanordnung **1** zur Plasmaerzeugung am Beispiel der Plasmaerzeugung für einen Laser **2.** Ein Leistungsmodul **3** weist eine Steuerungskarte **4** auf, die einen Mikrocontroller **5** enthält. Für die Spannungsversorgung der Steuerungskarte 4 bzw. der darauf angeordneten Bauelemente wird die Netzwechselspannung durch ein erstes und ein zweites Hilfsnetzteil **6,7** des Leistungsmoduls 3 auf die benötigte Spannung transformiert. Der Mikrocontroller 5 der Steuerungskarte 4 steht über einen Controller Area Network (CAN)-Bus **8** mit einer Zentralsteuerung **9** in Verbindung. Ein Mikrocontroller auf einer Busmasterkarte **10** der Zentralsteuerung setzt die Daten des CAN-Bus 8 auf Daten eines als Profi-Bus **11** ausgebildeten Feldbus um, der die Anbindung an eine Lasersteuerung darstellt. Für Service-Betrieb kann die Steuerkarte 4 weiterhin über eine serielle Schnittstelle mit einer Rechnereinheit **12** verbunden werden. Die eigentliche Leistungserzeugung erfolgt über einen Serienresonanzwandler (siehe später), zu dem eine Vollbrückenschaltung gehört. Die als Vollbrücke ausgebildete Schaltbrücke **14** ist im Ausführungsbeispiel aus Leistungstransistoren, nämlich Leistungs-MOSFETs **15-18** aufgebaut, deren Gates durch einen Gatetreiber **19** angesteuert werden. Der Gatetreiber 19 wird wiederum von der Steuerungskarte 4 gesteuert. Die Spannungsversorgung der Schaltbrücke 14 erfolgt direkt aus dem Wechselstromnetz durch Gleichrichtung, wobei die Gleichrichtung außerhalb der Hochfrequenzanregungsanordnung 1 erfolgt. Somit liegt an der Schaltbrücke 14 eine Zwischenkreisgleichspannung von etwa +/- 300V. Die Schaltbrücke 14 arbeitet nach dem Schaltprinzip von Klasse-D-Verstärkern und bringt, wenn das Signal "HF Ein" anliegt, die Zwischenkreisgleichspannung als Trapezspannung umgerichtet im Frequenzbereich 2-4MHz an den Ausgang der Schaltbrücke 14. Über die Frequenz wird die über eine Messplatine **20** gemessene Gleichstrom-(DC)-Eingangsleistung geregelt. Die Laserleistung wird nicht über diese Regelung eingestellt sondern durch die Tastung "HF Ein / HF Aus" mit variablem Tastverhältnis und einer Tastfrequenz von 10Hz - 100kHz. Die Tastung wird von der Zentralsteuerung 9 festgelegt und an die Steuerungskarte 4 übermittelt. Die hochfrequente trapezförmige Ausgangsspannung der Schaltbrücke 14 wird über einen Leistungsübertrager **21** je nach Anwendungsfall auf ca. 4kV hochtransformiert und als Sinusspannung den im Beispiel kapazitiven Elektroden **22-25** an den Entladungsrohren **26-29** zugeführt. In der Fig. 1 ist der Leistungsübertrager als Spartransformator ausgebildet, wobei die Primärspule **30** durch eine "Anzapfung" der Sekundärspule **31** gebildet ist. Eine kapazitive Elektrode 13 an der Sekundärwicklung des Leistungsübertragers erfasst dessen Spannung und somit auch die Spannung am Verbraucher (den Entladungsrohren 26-29). Die Elektrode 13 ist über eine Leitung mit der Messplatine 20 verbunden. Aus dem hier gebildeten Spannungssignal wird die Zünderkennung gewonnen, die nach dem Zünden der Gasentladung die Leistung freigibt. Im Ausführungsbeispiel sind die Entladungsrohre 26-29 Teile eines einzigen Gaslasers. Es können mehrere Leistungsmodule 3 vorgesehen sein, von denen jedes typischerweise vier Entladungsrohre versorgt. Es hat sich gezeigt, dass dann, wenn zu einem Gaslaser mehrere Entladungsrohre gehören, die somit optisch gekoppelt sind, und die zwecks Kühlung an eine einen Gasaustausch zwischen den Entladungsrohren bewirkende Gasumwälzung angeschlossen sind, die Zündung für alle Entladungsrohre im Wesentlichen gleichzeitig erfolgt, sobald ein Entladungsrohr gezündet hat. Die Anzahl der eingesetzten Leistungsmodule wird durch die Leistungsklasse des Lasers bestimmt.

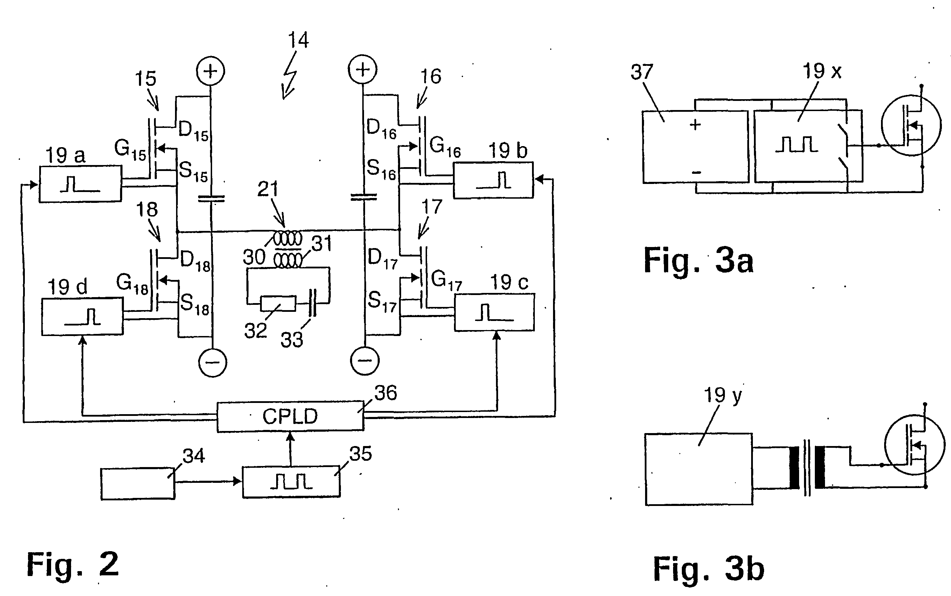

In **Fig. 2** ist die als Vollbrücke ausgebildete Schaltbrücke 14 des Leistungsmoduls 3 der Fig. 1 mit den Leistungs-MOSFETs 15-18 dargestellt. Die MOS-FETs 15, 16 sind mit ihrem Drain **D**_{**15**}**, D**_{**16**} mit der positiven Zwischenkreisgleichspannung verbunden und die Source **S**_{**17**}**, S**_{**18**} der MOS-FETs 17, 18 ist jeweils mit der negativen Zwischenkreisgleichspannung verbunden. Die Source **S**_{**15**} ist mit dem Drain **D**_{**18**} verbunden und die Source **S**_{**16**} ist mit dem Drain **D**_{**17**} verbunden. Zwischen den Klemmen S₁₅, D₁₈ und S₁₆, D₁₇ liegt über der Primärspule 30 des Leistungsübertragers 21 die Ausgangsspannung Uₒᵤₜ. Somit ist Uₒᵤₜ das Bezugspotential für die Ansteuerung der Leistungstransistoren 15, 16 und die negative Zwischenkreisgleichspannung das Bezugspotential für die Ansteuerung der Leistungstransistoren 17, 18. Die Sekundärspule 31 des Leistungsübertragers 21 bildet mit dem Plasmawiderstand **32** und der z.B. durch die Elektrodenkapazität des Lasers gebildeten Kapazität **33** einen Serienschwingkreis.

Die MOS-FETs 15-18 werden durch eine noch näher zu beschreibende Gateansteuerung 19a, 19b, 19c, 19d angesteuert. Ein Regler **34** gibt einem Oszillator **35** eine Frequenz vor.
Das Oszillatorsignal wird in einem Verteiler **36** in um 180° versetzte Taktsignale Takt1 und Takt2 aufgeteilt, wobei das Taktsignal Takt1 den Gateansteuerungen 19a, 19c der Leistungstransistoren 15, 17 und das Taktsignal Takt2 den Gateansteuerungen 19b, 19d der Leistungstransistoren 16, 18 zugeführt wird.

**Fig. 3a** zeigt ein Ausführungsbeispiel, bei dem ein allgemein mit 19x bezeichneter Gatetreiber, der direkt mit einem zu steuernden MOS-FET verbunden ist, und eine zugeordnete Stromversorgungseinheit 37 massefrei angeordnet sind. Die Stromversorgungseinheit 37 muß eine sichere Netzpotentialtrennung bei einer Frequenz von bis zu 4 MHz gewährleisten.

**Fig. 3b** zeigt ein anderes Ausführungsbeispiel mit einem auf Massepotential liegenden Gatetreiber, allgemein mit 19y bezeichnet, der mit dem zu steuernden MOS-FET durch einen Übertrager mit getrennten Wicklungen potentialfrei gekoppelt ist.

Beide Anordnungen nach Fig. 3a und 3b eignen sich für die Ansteuerung der auf unterschiedlichen Potentialen liegenden MOS-FETs 15, 16 einerseits und 17, 18 andererseits in Fig. 2.

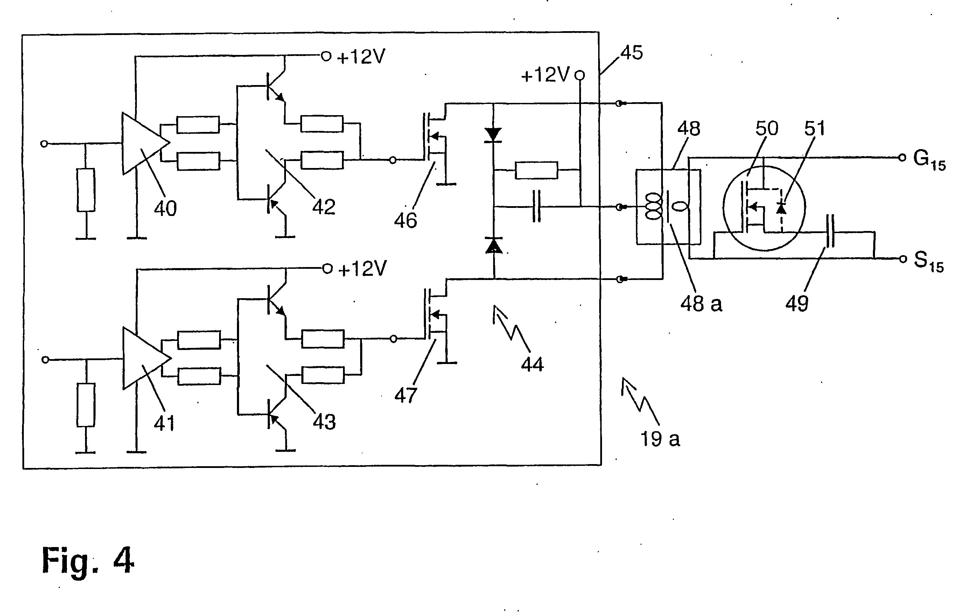

In **Fig. 4** ist der Gatetreiber 19 der Fig. 1 mit nur einer exemplarisch dargestellten Gateansteuerung 19a des Leistungstransistors 15 dargestellt. Diese macht von der in Fig. 3b skizzierten Übertragerkopplung (siehe Gateübertrager 48 weiter unten) Gebrauch. Die beiden um 180° versetzten Taktsignale Takt1 und Takt 2 werden in Treiber-ICs **40, 41** mit einer Verzögerung von im Beispiel nur 20ns auf 12V hochgesetzt. Nachgeschaltete Komplementär-Emitterfolger **42, 43** steuern die Treiberendstufe **44** der Gateansteuerung 19a an. Jede Gateansteuerung 19a, 19b, 19c, 19d weist eine Treiberendstufe 44 auf, die alle von den Komplementär-Emitterfolgern 42, 43 parallel angesteuert werden. Die Treiberendstufe 44 ist Teil eines mehrstufigen Impulsverstärkerteils **45** auf der Niederspannungsseite. Im Ausführungsbeispiel ist die Treiberendstufe 44 als Gegentaktschaltung mit zwei als MOSFETS ausgebildeten Transistoren **46, 47** ausgeführt. Die Treiberendstufe 44 erzeugt eine symmetrische Rechteckspannung des Gateübertragers **48.** Die Streuinduktivität des Gateübertragers 48 bildet mit der Eingangskapazität des angesteuerten Leistungstransistors 15 einen Schwingkreis. Dadurch entsteht ein sinusähnlicher Gatespannungsverlauf am angesteuerten Leistungstransistor 15, da die Schaltung mit einer Frequenz in der Nähe ihrer Eigenresonanz betrieben wird. Für den Gateübertrager 48 kommt ein Kern 48a aus Niederfrequenz-Ferrit zum Einsatz, das im Frequenzbereich 2-4MHz einen mit der Frequenz steigenden Verlustfaktor aufweist und eine stark fallende Permeabilität hat. Dadurch wird die Resonanzkurve verbreitert.

Der Kondensator **49** liegt parallel zur Eingangskapazität des Leistungstransistors 15, jedoch nur während der negativen Ansteuerphase der Gatespannung. Schaltendes Element **50** ist im Ausführungsbeispiel ein Logiclevel HilfsMOSFET, der von der Spannung des geschalteten Kondensators 49 selbst geschaltet wird. Die Body-Diode **51** des schaltenden Elements 50 und deren Recovery-Verhalten wird dabei ausgenutzt. Der Kondensator 49 und das schaltende Element 50 bilden einen Impulsformer.

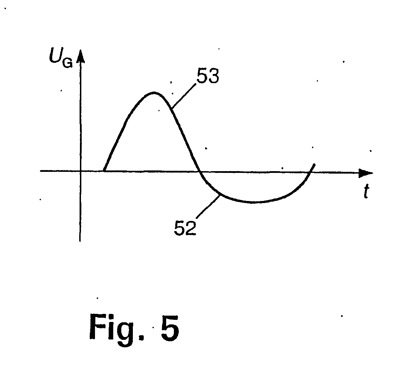

Die Gatespannung **U**_{**G**} ist in **Fig. 5** dargestellt. Die negative Ansteuerphase **52** ist aufgrund des Kondensators 49 im Vergleich zur positiven Ansteuerspannung **53** verlängert. Gleichzeitig ist die Amplitude der negativen Ansteuerspannung verringert. Der Kondensator 49 stellt also eine impulsformende Beschaltung dar, durch die das Ansteuertastverhältnis verkleinert wird. Dies ist zweckmäßig, da aufgrund der Spannungsabhängigkeit der Eingangskapazität des MOS-FETs 15 und aufgrund von unterschiedlichen Ein- und Ausschaltverzögerungen dessen Leitphase verlängert wird.

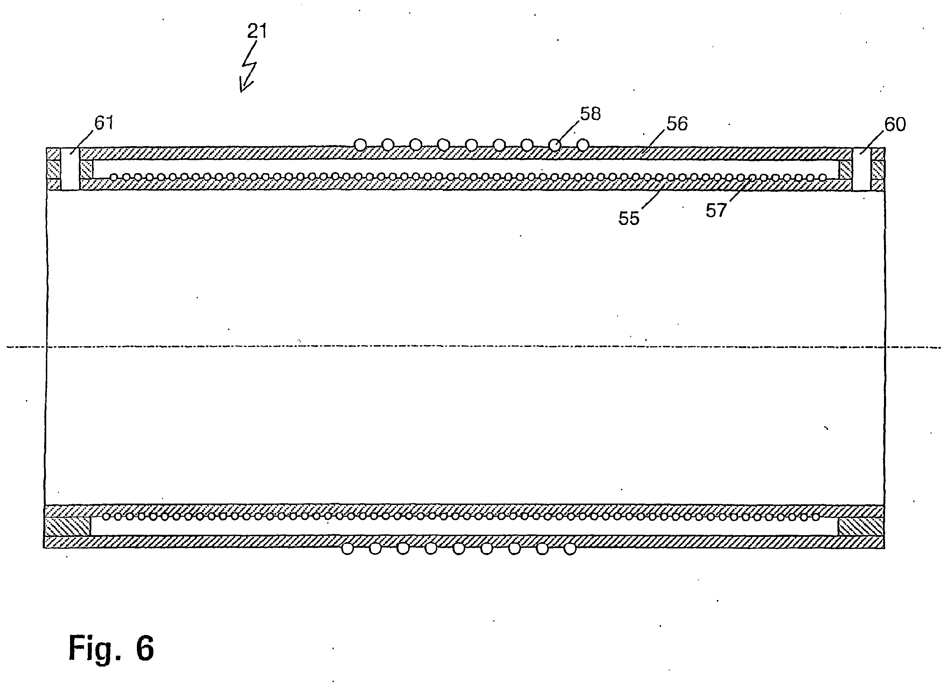

**Fig. 6** zeigt einen Querschnitt durch einen Leistungsübertrager 21, der zwei konzentrische Spulenkörper **55, 56** aus dielektrischem Material aufweist, wobei der Spulenkörper 55 die Sekundärwicklung **57** und der Spulenkörper 56 die Primärwicklung **59** jeweils aus versilbertem Kupferdraht trägt. Die Primärwicklung 59 ist außerhalb der Sekundärwicklung 57 angeordnet. Der Spulenkörper 56 ist durch Halterungen **60, 61** am Spulenkörper 55 gehalten. Dieser Übertrager ist bei einem anderen Ausführungsbeispiel anstatt des Übertragers der Fig. 1 vorgesehen.

Bei einer Hochfrequenzanregungsanordnung 1 mit mindestens einem an eine Spannungsquelle anzuschließenden, eine Schaltbrücke 14 enthaltenden Leistungsmodul 3, das mit einem Verbraucher zu verbinden ist, ist das Leistungsmodul 3 über einen eine Filterung durchführenden Leistungsübertrager 21 an den Verbraucher angeschlossen, wobei der Leistungsübertrager 21 im Betrieb mit dem Verbraucher einen Serienresonanzkreis bildet und die Streureaktanzen des Leistungsübertragers 21 für die Leistungsanpassung ausgenutzt werden. Der Leistungsübertrager übernimmt also mehrere Funktionen, so dass Bauelemente eingespart werden können.

## Patentansprüche

1. Hochfrequenzanregungsanordnung (1) mit mindestens einem an eine Spannungsquelle anzuschließenden, eine Schaltbrücke (14) enthaltenden Leistungsmodul (3), das mit einem Verbraucher zu verbinden ist, bei dem die Schaltbrükke (14) des Leistungsmoduls (3) mindestens zwei Leistungstransistoren aufweist, die von einem Gatetreiber (19) angesteuert sind und der Gatetreiber (19) für jeden Leistungstransistor eine Gateansteuerung (19a, 19b, 19c, 19d) mit einem Gateübertrager (48) aufweist, **dadurch gekennzeichnet, dass** jede Gateansteuerung (19a, 19b, 19c, 19d) eine Treiberendstufe (44) aufweist und die Streuinduktivität des Gateübertragers (48) mit der Eingangskapazität eines angesteuerten Leistungstransistors einen Schwingkreis bildet.

2. Hochfrequenzanregungsanordnung nach Anspruch 1, **dadurch gekennzeichnet, dass** das Leistungsmodul (3) über einen Leistungsübertrager (21) an den Verbraucher angeschlossen ist, wobei der Leistungsübertrager (21) im Betrieb mit dem Verbraucher einen Serienresonanzkreis bildet.

3. Hochfrequenzanregungsanordnung nach Anspruch 2, **dadurch gekennzeichnet, dass** für den Leistungsübertrager (21) eine symmetrische Anordnung vorgesehen ist, derart, dass gegenüber einer unsymmetrischen Anordnung die doppelte Elektrodenspannung erzeugt werden kann.

4. Hochfrequenzanregungsanordnung nach Anspruch 2 oder 3, **dadurch gekennzeichnet, dass** der Leistungsübertrager (21) als abstimmbare Luftspule ausgebildet ist.

5. Hochfrequenzanregungsanordnung nach Anspruch 2 oder 3 , **dadurch gekennzeichnet, dass** der Leistungsübertrager (21) als Spartransformator ausgebildet ist.

6. Hochfrequenzanregungsanordnung nach einem der vorhergehenden Ansprüche, **dadurch gekennzeichnet, dass** die Wicklungen (57, 59) des Leistungsübertragers (21) aus Starrdraht gebildet sind.

7. Hochfrequenzanregungsanordnung nach einem der vorhergehenden Ansprüche, **dadurch gekennzeichnet, dass** am Leistungsübertrager (21) Messeinrichtungen, insbesondere ein Spannungsdetektor, vorgesehen sind.

8. Hochfrequenzanregungsanordnung nach einem der vorhergehenden Ansprüche, **dadurch gekennzeichnet, dass** der Leistungsübertrager (21) über eine Streifenleitung an das mindestens eine Leistungsmodul (3) angeschlossen ist.

9. Hochfrequenzanregungsanordnung nach einem der vorhergehenden Ansprüche, **dadurch gekennzeichneit, dass** der Gateübertrager (48) mit einem Niederfrequenzferrit ausgebildet ist.

10. Hochfrequenzanregungsanordnung nach einem der vorhergehenden Ansprüche, **dadurch gekennzeichnet, dass** für jeden Leistungstransistor ein Impulsformer vorgesehen ist.

11. Hochfrequenzanregungsanordnung nach Anspruch 10, **dadurch gekennzeichnet, dass** der Impulsformer aus einem Kondensator (49) parallel zur Eingangskapazität des Leistungstransistors und einem schaltenden Element (50) gebildet ist.

12. Verfahren zum Betreiben einer Hochfrequenzanregungsanordnung (1), nach einem der vorhergehenden Ansprüche, mit einem eine Schaltbrücke (14) aufweisenden Leistungsmodul (3) und einem daran über einen Leistungsübertrager (21) angeschlossenen Verbraucher, wobei die Hochfrequenzanregung im Verbraucher zum Zünden des Verbrauchers mit einer so hohen Frequenz über der Resonanzfrequenz eines Verbraucherschwingkreises erfolgt, dass nur eine geringe Leistungseinkopplung in die Schaltbrücke erfolgt, und danach die Hochfrequenzanregung im Bereich der Resonanzfrequenz des Verbraucherschwingkreises erfolgt, für eine optimale Leistungskopplung in den Verbraucher.

13. Verfahren nach Anspruch 12, **dadurch gekennzeichnet, dass** eine Spannungsüberwachung des Verbrauchers erfolgt.

14. Verfahren nach einem der Ansprüche 12 oder 13, **dadurch gekennzeichnet, dass** das Plasma des Verbrauchers durch eine Zündsequenz, insbesondere durch Pulsketten mit kurzer Einzelpulsbreite, gezündet wird.

15. Verfahren nach einem der Ansprüche 12 bis 14, **dadurch gekennzeichnet, dass** die Eingangsleistung jedes Leistungsmoduls (3) eigenständig durch die Frequenz und die Verbraucherleistung für alle Leistungsmodule (3) synchron durch das Tastverhältnis der Signale "HF Ein / HF Aus" geregelt wird.

16. Verfahren nach einem der Ansprüche 12 bis 14, **dadurch gekennzeichnet, dass** eine selbständige Frequenzeinstellung erfolgt.

## Claims

1. A high-frequency excitation system (1) having at least one power module (3) which is to be coupled to a voltage source, and which power module (3) contains a switching bridge (14) and is to be connected to a load, in which the switching bridge (14) of the power module (3) has at least two power transistors which are driven by a gate driver (19) and the gate driver (19) has for each power transistor a gate drive (19a, 19b, 19c, 19d) with a gate transformer (48), **characterised in that** each gate drive (19a, 19b, 19c, 19d) has a driver output stage (44) and the leakage inductance of the gate transformer (48) forms an oscillating circuit with the input capacitance of a driven power transistor.

2. A high-frequency excitation system according to claim 1, **characterised in that** the power module (3) is connected to the load via a power transformer (21), the power transformer (21) forming in operation a series resonant circuit with the load.

3. A high-frequency excitation system according to claim 2, **characterised in that** a symmetrical arrangement is provided for the power transformer (21) such that double the electrode voltage can be generated as compared with an asymmetrical arrangement.

4. A high-frequency excitation system according to claim 2 or 3, **characterised in that** the power transformer (21) is constructed as a tunable air-core coil.

5. A high-frequency excitation system according to claim 2 or 3, **characterised in that** the power transformer (21) is constructed as an autotransformer.

6. A high-frequency excitation system according to any one of the preceding claims, **characterised in that** the windings (57, 59) of the power transformer (21) are formed by rigid wire.

7. A high-frequency excitation system according to any one of the preceding claims, **characterised in that** measuring devices, especially a voltage detector, are provided on the power transformer (21).

8. A high-frequency excitation system according to any one of the preceding claims, **characterised in that** the power transformer (21) is connected to the at least one power module (3) by a stripline.

9. A high-frequency excitation system according to any one of the preceding claims, **characterised in that** the gate transformer (48) is constructed using a low-frequency ferrite.

10. A high-frequency excitation system according to any one of the preceding claims, **characterised in that** a pulse shaper is provided for each power transistor.

11. A high-frequency excitation system according to claim 10, **characterised in that** the pulse shaper is formed by a capacitor (49) parallel to the input capacitance of the power transistor and by a switching element (50).

12. A method for operating a high-frequency excitation system (1) according to any one of the preceding claims, comprising a power module (3) having a switching bridge (14) and comprising a load connected to the power module (3) *via* a power transformer (21), wherein the high-frequency excitation in the load for igniting the load is carried out at such a high frequency above the resonant frequency of a load oscillating circuit that only a slight coupling of power into the switching bridge occurs, and thereafter the high-frequency excitation is carried out in the range of the resonant frequency of the load oscillating circuit, for optimum coupling of power into the load.

13. A method according to claim 12, **characterised in that** voltage monitoring of the load is carried out.

14. A method according to either claim 12 or claim 13, **characterised in that** the plasma of the load is ignited by an ignition sequence, especially by pulse strings of short individual pulse width.

15. A method according to any one of claims 12 to 14, **characterised in that** the input power of each power module (3) is regulated independently by the frequency and the load power for all the power modules (3) is regulated synchronously by the pulse duty ratio of the signals "HF on / HF off".

16. A method according to any one of claims 12 to 14, **characterised in that** autonomous frequency setting takes place.

## Revendications

1. Système d'excitation à haute fréquence (1) avec au moins un module de puissance (3) à raccorder à une source de tension, lequel module de puissance (3) contenant un pont de commutation (14) est à connecter à un consommateur, dans lequel système le pont de commutation (14) du module de puissance (3) présente au moins deux transistors de puissance qui sont commandés par un pilote de grille (19) et le pilote de grille (19) pour chaque transistor de puissance présente une commande de grille (19a, 19b, 19c, 19d) avec un transformateur de grille (48), **caractérisé par le fait que** chaque commande de grille (19a, 19b, 19c, 19d) présente un étage final pilote (44) et que l'inductance de fuite du transformateur de grille (48) forme un circuit oscillant avec la capacité d'entrée d'un transistor de puissance commandé.

2. Système d'excitation à haute fréquence selon la revendication 1, **caractérisé par le fait que** le module de puissance (3) est connecté au consommateur par l'intermédiaire d'un transformateur de puissance (21), lequel transformateur de puissance (21) forme, en service, un circuit résonnant série avec le consommateur.

3. Système d'excitation à haute fréquence selon la revendication 2, **caractérisé par le fait qu'**il est prévu pour le transformateur de puissance (21) une configuration symétrique, de telle manière qu'il soit possible de générer une tension d'électrode double par rapport à une configuration asymétrique.

4. Système d'excitation à haute fréquence selon la revendication 2 ou 3, **caractérisé par le fait que** le transformateur de puissance (21) est réalisé sous la forme d'une bobine à air accordable.

5. Système d'excitation à haute fréquence selon la revendication 2 ou 3, **caractérisé par le fait que** le transformateur de puissance (21) est réalisé sous la forme d'un autotransformateur.

6. Système d'excitation à haute fréquence selon l'une des revendications précédentes, **caractérisé par le fait que** les enroulements (57, 59) du transformateur de puissance (21) sont formés de fil rigide.

7. Système d'excitation à haute fréquence selon l'une des revendications précédentes, **caractérisé par le fait qu'**il est prévu des dispositifs de mesure, en particulier un détecteur de tension, sur le transformateur de puissance (21).

8. Système d'excitation à haute fréquence selon l'une des revendications précédentes, **caractérisé par le fait que** le transformateur de puissance (21) est connecté audit au moins un module de puissance (3) par une ligne à ruban.

9. Système d'excitation à haute fréquence selon l'une des revendications précédentes, **caractérisé par le fait que** le transformateur de grille (48) est formé par un ferrite à basse fréquence.

10. Système d'excitation à haute fréquence selon l'une des revendications précédentes, **caractérisé par le fait qu'**il est prévu un conformateur d'impulsions pour chaque transistor de puissance.

11. Système d'excitation à haute fréquence selon la revendication 10, **caractérisé par le fait que** le conformateur d'impulsions est formé d'un condensateur (49) en parallèle sur la capacité d'entrée du transistor de puissance et d'un élément à commutation (50).

12. Procédé pour faire fonctionner un système d'excitation à haute fréquence (1) selon l'une des revendications précédentes, avec un module de puissance (3) présentant un pont de commutation (14) et un consommateur connecté à celui-ci par l'intermédiaire d'un transformateur de puissance (21), selon lequel l'excitation à haute fréquence dans le consommateur destinée à allumer le consommateur est réalisée à une fréquence tellement supérieure à la fréquence de résonance d'un circuit oscillant de consommateur qu'il ne se produit qu'un faible couplage de puissance dans le pont de commutation, et ensuite l'excitation à haute fréquence est réalisée au voisinage de la fréquence de résonance du circuit oscillant de consommateur pour un couplage de puissance optimal dans le consommateur.

13. Procédé selon la revendication 13, **caractérisé par le fait que** la tension du consommateur est surveillée.

14. Procédé selon l'une des revendications 12 ou 13, **caractérisé par le fait que** le plasma du consommateur est allumé par une séquence d'allumage, en particulier par des chaînes d'impulsions de courte largeur d'impulsion élémentaire.

15. Procédé selon l'une des revendications 12 à 14, **caractérisé par le fait que** la puissance d'entrée de chaque module de puissance (3) est réglée de manière autonome par la fréquence et la puissance de consommateur de manière synchrone pour tous les modules de puissance (3) par le rapport cyclique des signaux « HF marche / HF arrêt ».

16. Procédé selon l'une des revendications 12 à 14, **caractérisé par le fait que** le réglage de fréquence est automatique.
